# EUROPEAN PATENT SPECIFICATION

(11) **EP 4 469 809 B1**
(45) Date of publication and mention of the grant of the patent: **13.05.2026**
(21) Application number: 23704383.1
(22) Date of filing: 20.01.2023
(51) Int. Cl.: G01P 5/24, G01F 1/66, G01F 1/667

(54) **FLUID FLOW SENSORS**
FLÜSSIGKEITSDURCHFLUSSSENSOR
CAPTEURS D'ÉCOULEMENT DE LIQUIDE

(30) Priority: 25.01.2022 GB 202200955
(43) Date of publication of application: 04.12.2024
(73) Proprietor: FT Technologies (UK) Ltd, Sunbury-on-Thames TW16 7DX (GB)
(72) Inventor: JIMENEZ-GARCIA, Antonio, Sunbury-on-Thames TW16 7DX (GB); DEMERLE, Nils, Sunbury-on-Thames TW16 7DX (GB)
(74) Representative: Marks & Clerk LLP
(86) International application number: PCT/GB2023/050124
(87) International publication number: WO 2023/144513

(56) References cited:
- FR-A1- 2 800 876
- FR-A1- 2 930 346
- GB-A- 2 594 760
- US-A- 5 877 416
- US-A1- 2021 055 148
- US-B2- 10 908 176

## Description

### FIELD OF THE INVENTION

The present invention relates to fluid flow sensors.

### BACKGROUND TO THE INVENTION

Acoustic resonance fluid flow sensors measure the speed and direction of fluid flow by measuring excited acoustic waves in a cavity at a resonant frequency thereof. The cavities of such sensors are typically defined between a pair of reflector surfaces and acoustic waves are typically excited and measured within the cavity by electro-acoustic transducers in one of the reflector surfaces.

US 5,877,416 A discloses an anemometer comprising an acoustic resonant cavity between two plates and open in the direction of flow of a fluid, the cavity having at least one pair of electro acoustic transducers which are energised at an Eigenfrequency to produce a standing wave perpendicular to the direction of flow of the fluid and a travelling wave perpendicular to the standing wave.

### SUMMARY OF THE INVENTION

According to an embodiment of the invention, there is provided an acoustic resonance fluid flow sensor comprising: a first reflector surface; a second reflector surface spaced apart from the first reflector surface; a generally cylindrical cavity between the first and second reflector surfaces, the cavity comprising a central longitudinal axis; and a plurality of transducers located in the first reflector surface, at least one transducer of the plurality of transducers occupying a space from a first radial distance from the longitudinal axis to a second radial distance from the longitudinal axis. The cavity further comprises a narrowest part where a separation between the first and second reflector surfaces is a minimum distance, the minimum distance being less than a separation between the first and second reflector surfaces along the longitudinal axis. The narrowest part at least partially surrounds the longitudinal axis and is at least partially located between the first radial distance and the second radial distance from the longitudinal axis.

In some embodiments, one of the first and second reflector surfaces comprises a ridge surrounding a centre of that reflector surface. The narrowest part of the cavity may be defined between the ridge and the other of the first and second reflector surfaces.

The ridge may be continuous annular ridge that surrounds the centre of the reflector surface on which it is formed and/or may have an arc-shaped cross section.

The ridge may be comprised by the second reflector surfaces, may be radially symmetric (and/or axisymmetric) about the longitudinal axis.

The ridge may be at least partially surround the centre of the reflector surface by which it is comprised.

The ridge may comprise an inclined inner face facing towards the longitudinal axis, which may be arranged to surround the centre of the reflector surface by which it is comprised.

The reflector surface comprising the ridge may comprise an area more distant from the longitudinal axis than the ridge that is substantially flat and which surrounds the ridge.

The ridge may be located entirely further from the longitudinal axis than 30% of a radius of a smaller of the first and second reflector surfaces.

The ridge may comprise a crest located entirely between a radius from the longitudinal axis equal to 55% of a radius of a smaller of the first and second reflector surfaces and a radius equal to 80% of the radius of the smaller of the first and second reflector surfaces.

In some embodiments, at least one of the first and second reflector surfaces comprises an indentation at least partially surrounded by the narrowest part of the cavity.

The indentation may be concave.

The reflector surface comprising the indentation may comprise an area more distant from the longitudinal axis than the indentation and which surrounds the indentation, wherein the surrounding area is substantially flat. The narrowest part of the cavity may be defined between this area and the other of the first and second reflector surfaces.

The reflector surface comprising the indentation may further comprise a ridge as described above. An edge of the ridge may be flush with a lip of the indentation.

The indentation may be radially symmetric or axisymmetric about the longitudinal axis.

In some embodiments, the sensor further comprises a lip surrounding at least one of the first and second reflector surfaces.

The lip may be entirely located at a greater distance from the longitudinal axis than the second radial distance.

The lip may surround the first reflector surface, and/or may surround a reflector surface opposite a reflector surface comprising an annular ridge and/or central indentation.

In some embodiments, the lip may not overlap the narrowest part in a view/projection along the longitudinal axis.

In some embodiments, the at least one transducer has a centre at a third radial distance from the longitudinal axis, and wherein the narrowest part is at least partially located at a radial location between the second radial distance and half of the third radial distance.

The plurality of transducers may have centres at the same radial distance from the longitudinal axis and/or may each occupy a space from the first radial distance from the longitudinal axis to the second radial distance from the longitudinal axis.

The narrowest part may be at least partially or entirely located between the second radial distance and the third radial distance.

In some embodiments, the at least one transducer comprises a centre at a third radial distance from the longitudinal axis, and wherein the narrowest part of the cavity is entirely located at a distance of at least half the third radial distance from the longitudinal axis.

The narrowest part of the cavity may be entirely located at least an average of the first and third radial distances from the longitudinal axis. The narrowest part of the cavity is therefore further from the longitudinal axis than a midpoint of the first and third radial distances.

The narrowest part of the cavity may be located entirely further from the longitudinal axis than the first radial distance.

In some embodiments, the narrowest part of the cavity is entirely located at least a distance equal to 30% of a radius of a smaller of the first and second reflector surfaces from the longitudinal axis.

Specific embodiments are described below, by way of example only, with reference to the following drawings.

### BRIEF DESCRIPTION OF THE FIGURES

Fig. 1a is an external view of a fluid flow sensor;
Fig. 1b is a vertical cross sectional view of the fluid flow sensor of Fig. 1a;
Fig. 1c is a horizontal cross sectional view of the fluid flow sensor of Fig. 1a;
Fig. 2 is a graph of the frequency response of the fluid flow sensor of Fig. 1a;
Fig. 3a shows the acoustic pressures of fluid within the sensor of Fig. 1a when an acoustic response is excited in a first mode at a first resonant frequency;
Fig. 3b shows the acoustic pressures of fluid within the sensor of Fig. 1a when an acoustic response is excited in a second mode at a second resonant frequency;
Fig. 4 is a cross sectional view of a fluid flow sensor comprising an annular ridge on its lower reflector;
Fig. 5 is a cross sectional view of a fluid flow sensor comprising a central concave indentation on its lower reflector;
Fig. 6 is a cross sectional view of a fluid flow sensor comprising an annular ridge and a central concave indentation on its lower reflector;
Fig. 7 is a graph of the frequency responses of the fluid flow sensors of Figs. 4 and 6;
Fig. 8 is a cross sectional view of a fluid flow sensor comprising an annular ridge and a central concave indentation on its lower reflector, and a lip around its upper reflector; and
Fig. 9 is a top-down view of the fluid flow sensor of Fig. 8.

### DETAILED DESCRIPTION

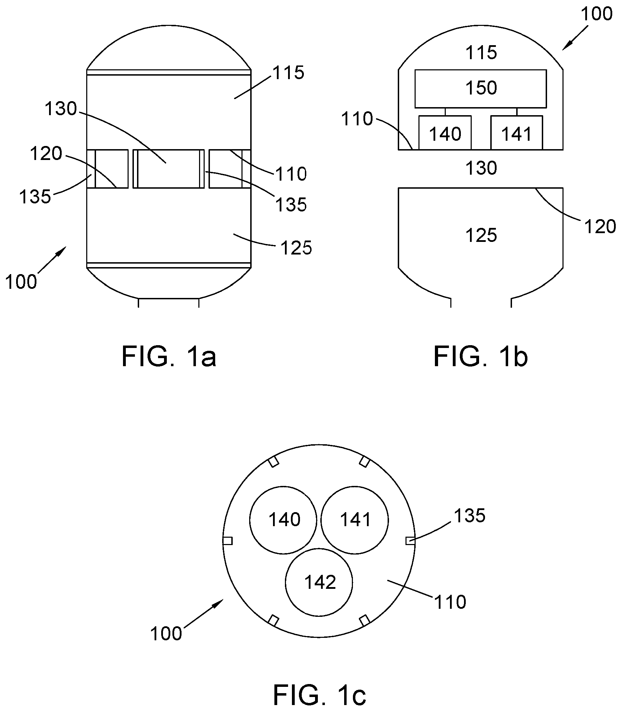

Figs. 1a to 1c show an example an acoustic resonance fluid flow sensor 100 comprising a first reflector surface 110, a second reflector surface 120, and an acoustic resonance cavity 130 defined between the reflector surfaces 110, 120.

The reflector surfaces 110, 120 of the illustrated sensor 100 are generally circular and are arranged substantially parallel to each other in order to define the cylindrical cavity 130 therebetween. The reflector surfaces 110, 120 are defined by upper and lower housing bodies 115, 125 and are interconnected by spacer posts 135, which extend between them near the edge of the cavity 130. The illustrated sensor 100 comprises six posts 135 equally spaced around the perimeter of the cavity 130 in a hexagonal arrangement.

The sensor further comprises a plurality of electro-acoustic transducers for emitting and receiving acoustic signals. The illustrated sensor 100 comprises three electro-acoustic transducers 140, 141, 142 in a triangular arrangement in the first reflector surface 110; and an electronics unit 150 coupled to the electro-acoustic transducers 140, 141, 142 to facilitate their operation. In the illustrated sensor the first reflector 110 comprising the transducers 140, 141, 142 is the upper reflector, although in alternative sensors it may be the lower reflector.

In use, one of the transducers 140 may emit an acoustic stimulus signal, thereby generating an acoustic response within the cavity 130. Each other transducer 141, 142 may then receive the acoustic response within the cavity. The phase shift of the response signal received by each receiving transducer 141, 142 relative to the phase of the emitted acoustic stimulus signal depends upon the time taken for the acoustic wave to travel from the emitting transducer 140 to that receiving transducer 141, 142, which in turn depends upon the speed of fluid flow along that axis.

The speed of fluid flow within the cavity along an axis between any pair of two transducers 140, 141 may therefore be calculated from the difference in phase shift between when a first transducer 140 emits and a second transducer 141 receives and when the second transducer 141 emits and the first transducer 140 receives. The velocity (speed and direction) of fluid flowing through the cavity 130 in a plane parallel to the reflectors 110, 120 may be calculated from velocity components along the axes between two or more different pairs of transducers.

Fluid flow sensors 100 as described above may be used for measuring wind speed and direction, in which case the fluid within the cavity 130 is air. However, such sensors 100 may also measure other fluids' flow speeds and directions.

The transducers 140, 141, 142 preferably emit acoustic stimulus signal at a resonant frequency of the cavity, such that the amplitude of the acoustic response within the cavity is significantly increased. This may be represented by a peak at this frequency in the frequency response 200 of the sensor 100. Increasing the amplitude of the acoustic response within the cavity may improve measurements of phase shifts and wind velocity measurements derived therefrom, for example by improving the signal to noise ratio of the measured acoustic response.

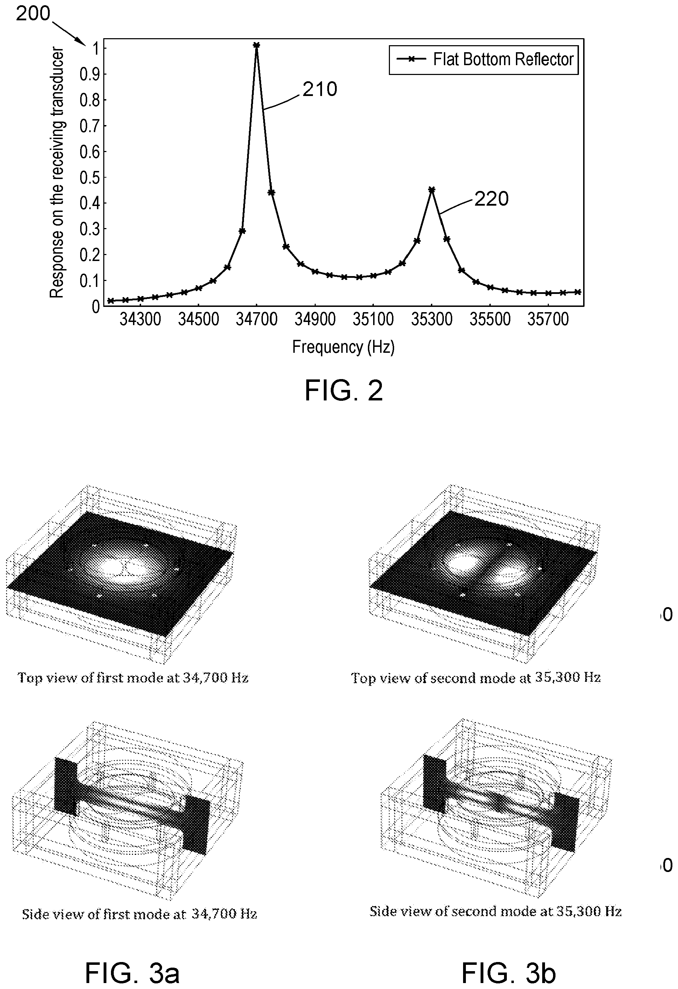

Fig. 2 shows the frequency response 200 of a sensor 100 as shown in Figs. 1a to 1c. Such a frequency response may be obtained by separately emitting acoustic signals with one of the transducers at each of a sequence of frequencies separated by 50Hz steps, and measuring the amplitude of the excited acoustic response with the other. The frequency response includes peaks 210, 220 at each resonant frequency of the cavity 130.

The frequency response 200 includes a primary resonance peak 210 at a first resonant frequency of approximately 34700 Hz, corresponding to a wavelength approximately equal to the 10mm separation between the first and second reflectors 110, 120. This frequency is a first harmonic of a fundamental frequency of the cavity at 17350Hz, corresponding to a wavelength approximately double the separation between the first and second reflectors 110, 120.

At the first resonant frequency shown in the frequency response 200, the sound within the cavity 130 is predominantly in a first acoustic mode. For the illustrated sensor 100, this first mode generally has the greatest amplitude of any mode of the cavity 130, and is axisymmetric around the central longitudinal axis of the cylindrical cavity 130. Fluid flow measurements are therefore preferably performed by exciting and measuring the acoustic response at or near this first resonant frequency.

The frequency response 200 includes a second peak 220 at a second frequency of approximately 35300 Hz, at which the fluid within the cavity 130 is predominantly in a second acoustic mode. The second resonant frequency of the illustrated sensor 100 is not a harmonic of the same fundamental resonant frequency as first resonant frequency. In the illustrated sensor 100, the second mode is not axisymmetric and therefore fluid speed measurements at this frequency would be dependent upon the direction of the fluid flow, reducing the accuracy with which fluid flow velocities could be measured.

Figs. 3a and 3b shows the acoustic pressures of fluid within a sensor 100 when an acoustic response is excited in the first mode 300 at the first resonant frequency 210 of 34700 Hz and when an acoustic response is excited in the second mode 350 at the second resonant frequency 220 of 35300 Hz respectively. In the first mode 300, the pressure is maximum at the centre of the cavity 130, but is similar at all radii within the cavity 130 until close to the open side of the cavity, at which it decays rapidly. In the second mode, the pressure is zero along a radial axis through the centre of the cavity 130, which separates two lobes in opposite phase. The second mode is illustrated when the acoustic response in the cavity is excited by the transducer towards the bottom-right of the figures.

In order to ensure that the fluid flow measurements with the sensor 100 are performed as accurately as possible, the acoustic response is preferably excited and measured at the first resonance 210, which, as described above, has a high signal to noise ratio, and its acoustic field distribution is predominantly axisymmetric.

The resonant frequencies of the cavity 130 primarily depend upon its geometry, but may also vary with fluid temperature, pressure and/or humidity, or when precipitation, or other material, accumulates on the second lower reflector surface 120 reducing the effective height of the cavity 130. The first resonant frequency of the cavity 130 may therefore be tracked in order to ensure the acoustic response is preferably excited and measured at that first resonant frequency, for example, based on the amplitudes of frequencies in a window.

However, if the second peak 220 is too prominent and/or too close to the first peak 210, the tracking of the first resonant frequency may mistake the second peak 220 at the second resonant frequency for the peak at the first resonant frequency, which may result in measurements being sub-optimally performed at the second resonant frequency.

Additionally, if the second peak 220 is too close to the first peak, acoustic responses that are excited at the first resonant frequency partially are to an undesirable degree composed of the second mode, which superimposes on the first mode. This degrades the directional accuracy of fluid flow velocity measurements at the first resonant frequency due to the presence of the non-axisymmetric second mode.

It has been recognised that reducing the prospect of, the second resonance peak 220 interfering with measurements made at the first resonant frequency as described above, can improve the performance of fluid flow sensors.

Embodiments described below are fluid flow sensors with frequency responses with greater frequency separations between their first and second resonant frequencies corresponding to first and second modes and greater ratios in the frequency response amplitudes of the first and second modes. Such sensors comprise first and second spaced apart reflector surfaces, a generally cylindrical cavity with a central longitudinal axis between the reflector surfaces, and a plurality of transducers located in the first reflector surface, at least one of the transducers occupying a space between first and second radial distances from the longitudinal axis. The cavity further comprises a narrowest part where the first and second reflector surfaces are separated by a minimum distance that is less than their separation along the longitudinal axis. The narrowest part at least partially surrounds the longitudinal axis and is at least partially located between the first and second radial distances from the longitudinal axis.

Such sensors comprise cavities with greater separations between their reflector surfaces at their centres, where their first modes are strong and their second modes are absent, than in areas surrounding their centres beneath their transducers, where their second modes are relatively strong. This shortens the wavelength of standing waves of their second modes relative to those of their first modes, increasing the frequency separation between the first and second peaks of their frequency responses.

Additionally, such cavities may focus acoustic waves towards the centre of their cavities, where the second mode is weak and the first mode dominates, thereby amplifying the first peak, and/or may dissipate or diffract reflections towards the edge of their cavities where the second mode is relatively strong.

The narrowest part of the cavity may be defined by the crest of an annular ridge on one of the reflector surfaces, or by a region of one of the reflectors surrounding a central indentation that defines a part of the cavity with a greater separation. The narrowest part of the cavity is at least partially located between an inside and outside radius of one of the sensor's transducers, such that a portion of the narrowest part of the cavity is located between that transducer and the second reflector surface.

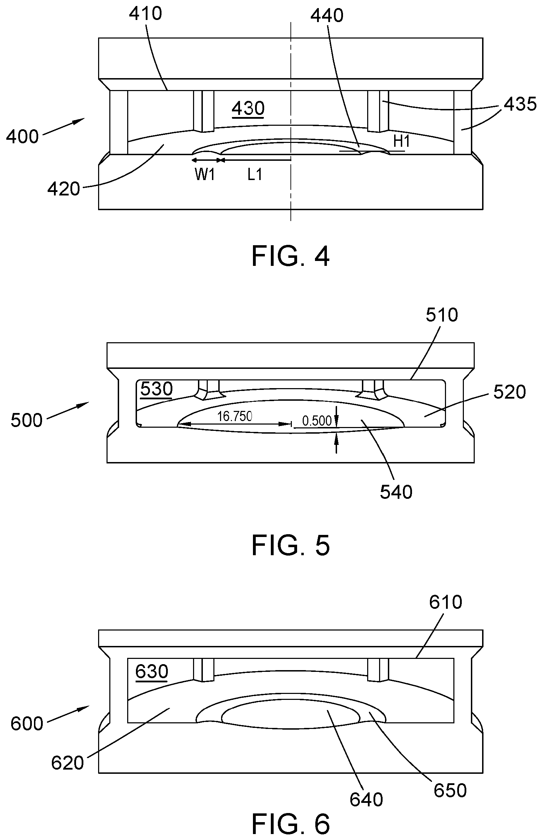

Fig. 4 shows a first embodiment of a fluid flow sensor 400, which comprises an annular ridge 440 on its second reflector surface 420, opposite a planar first reflector 410 surface in which electro-acoustic transducers are located.

The crest of the annular ridge 440 is the highest part of the second reflector surface 420 and defines an annular narrowest part of the cavity 430 between itself and the planar first reflector surface 410. The annular ridge 440 is centred on the central longitudinal axis of the cavity 430, and is provided at a radius from the centre of the cavity 430 (and of its reflector surface 420) such that it is located beneath and/or opposite the transducers (and centres thereof). In the portion of the cavity 430 occupied by the annular ridge, the second mode is relatively strong. Moreover, the annular ridge 440 surrounds a central portion of the cavity 430 where the second mode is weak compared to the first mode.

The annular ridge 440 decreases the separation between the reflector surfaces in the outer part of the cavity 430 in which it located relative to the separation between the surfaces in the centre of the cavity 430 that it surrounds, thereby reducing the effective resonant length of the second mode of the cavity 430, in comparison to that of a cavity 130 with a flat second reflector 120. This increases the resonance frequency of the cavity's second mode to approximately 35925Hz. The resonance frequency of the first mode is also increased relative to that of a flat-bottomed sensor 100, but by less than the frequency of the second mode, to approximately 35240Hz. Therefore, the frequency separation between the peaks of the frequency response is increased. In finite element analysis (FEA) simulations, the frequency separation is increased to approximately 685Hz compared to approximately 600Hz in the flat-bottomed sensor of Figs. 1a to 1c.

In the sensor 400 of Fig. 4, the annular ridge has an arc-shaped cross-section such that it defines a convex surface in the outer part of the cavity 430. This convex surface dissipates or diffracts acoustic waves incident upon it, thereby decreasing the strength of the second mode. In FEA simulations, providing the annular ridge reduces the amplitude of the second peak 220 by approximately half in comparison to that of the cavity 130 with a flat second reflector 120. In alternative embodiments, sensors may comprise differently shaped annular ridges, such as those with rectangular, or triangular, cross-sections.

The arc-shaped annular ridge 440 comprises an inner surface inclined towards the centre of the cavity 430. This inner surface defines a part of a generally concave surface for converging acoustic waves towards the centre of the cavity 430, thereby amplifying the first mode. In FEA simulations, providing the annular ridge increases the amplitude of the first peak 210 by approximately 75% in comparison to that of the cavity 130 with a flat second reflector 120.

Embodiments described herein aim to decrease a ratio (M2/M1) between the amplitude of the second peak (M2) and that of the first peaks (M1). The ratio M2/M1 of the flat bottomed sensor 100 shown in Figs. 1a to 1c is approximately 0.5 and the reduced ratio M2/M1 of the sensor 400 with the annular ridge 440 shown in Fig. 4 is 0.14.

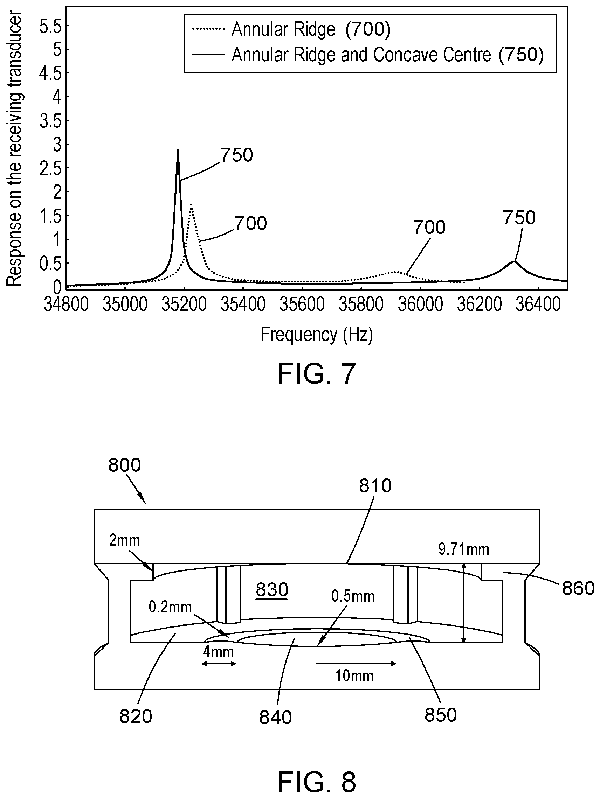

The frequency response of the sensor 400 of Fig. 4 is shown in Fig. 7, along with the frequency response of a further sensor 600 shown in Fig. 6 and described below.

In the sensor 400 of Fig. 4, the annular ridge 440 is a continuous annular ridge 440 around the centre of the second reflector 420 at a constant radius, with an arc shaped cross section with a constant height and width. The ridge surrounds the centre of the second reflector 420.

The illustrated sensor 400 has a lower reflector 420 of radius 25mm, an upper reflector 410 of radius 20.25mm, and a separation between the reflectors 410, 420 of 10mm. The sensor 400 comprises three transducers with 9mm radii in a triangular arrangement with centres 11mm from the centre of the upper reflector 410. The annular ridge 440 has a height (H1) of 0.2mm (2% of the cavity height), a width (W1) of 6mm (24% of the second reflector radius) and is located with an inner edge at a radius (L1) of 10mm (40% of the second reflector radius) and a crest at a radius of 13mm.

The height of the ridge 440 inside the volume of the cavity 430 is preferably deliberately kept small compared to the separation between the reflectors 410, 420, such that the ridge does not unduly interfere with the flow of fluid through the cavity. For example, so that the ridge does not overly reduce the speed of fluid flowing through the cavity. In the illustrated sensor 400, the total height of the ridge 440 inside the volume of the cavity 430 is only 0.2mm, 2% of the 10mm separation between the reflectors 410, 420. In other embodiments, the ridge may be shorter or taller, for example between 1% and 5% of the maximum separation between the reflector surfaces.

Alternatively, or additionally, any influence of the ridge 440 on the flow of fluid through the cavity may be reduced by the radial width of the ridge 440 being kept small relative to the radii of the cavity 430 and/or the reflector surfaces 410, 420. In the illustrated sensor 400, the annular ridge has a width of 6mm, equal to 24% of the radius of the lower reflector 420 and the cavity 430. In other embodiments, the ridge's width may be between 40% and 15% of the radius of the cavity 430 and/or the reflector surface 420 on which the ridge 440 is formed.

Alternatively, or additionally, any influence of the ridge 440 on the flow of fluid through the cavity may be reduced by the entire profile of the ridge 440 being distanced from the perimeter of the cavity 430 such that it does not introduce a hindrance to the fluid entering and exiting the cavity. The annular ridge 440 may be surrounded by a portion of its reflector surface 420 which may be substantially planar between the ridge and the perimeter of the cavity 430. In the illustrated sensor 400, the separation between the outside of the annular ridge 440 and the perimeter of the cavity 430 is 9mm, 36% of the radius of the lower reflector 420 and the cavity 430. In other embodiments, the separation between the outside of the annular ridge 440 and the perimeter of the cavity 430 may be between 15% and 50% of the radius of the lower reflector 420 and the cavity 430.

Alternatively, or additionally, the ridge 440 may be shaped appropriately to reduce aerodynamic drag, which may reduce any influence on fluid flowing through the cavity. For example, the ridge 440 may have an arc-shaped or hump-shaped cross section as shown in the illustrated sensor 400.

The purpose of the ridge 440 is to manipulate beneficially the acoustic field inside the cavity in the manner explained above, while at the same time leaving the flow field (speed and direction of air through the cavity 430), largely undisturbed.

It will be appreciated that in alternative embodiments the annular ridge may have other dimensions and/or shapes. For example, the annular ridge may comprise one or more gaps at points along its perimeter which may facilitate drainage from the centre of the second reflector 420. Such gaps may be aligned with the supports 435 between the reflector surfaces 410, 420, such that they do not decrease the radial symmetry of the sensor, in order to reduce variations on fluid flow speeds through the cavity with the angles of fluid flows. In such embodiments, the narrowest part of the cavity may be only partially annular and may only partially surround the centre. The annular ridge and the narrowest part of the cavity are preferably radially symmetric.

In the illustrated embodiment, the annular ridge 440 covers points on the second reflector surface opposite and/or beneath the centres of the transducers (i.e. points through which axes parallel to the central longitudinal axis will intersect the centres of the transducers). Specifically, the centres of the transducers are opposite an inner surface of the annular ridge 440 between its inner edge and its crest that is inclined towards the centre of the cavity 430.

However, in other sensors may be arranged differently, such as with both its inner edge and its crest between the radius at which the transducers' centres are located and at which their outer edge is located. For example, FEA simulations of a sensor with an annular ridge with an inner edge at a radius of 11.5mm, a width of 5mm, a crest at a radius of 14mm, and otherwise identical dimensions to the sensor 400 shown in Fig. 4 have frequency responses with approximately 700Hz separating the first and second peaks and a ratio M2/M1 of approximately 0.1 between their amplitudes.

In alternative embodiments, in which the annular ridge is provided on the first reflector surface in which the transducers are located, the annular ridge may be provided at a radius from the centre of the cavity and of that reflector, such that the ridge (and/or an inner surface thereof) overlaps, covers and/or is superposed on the transducers (and optionally centres thereof).

Fig. 5 shows a second embodiment of a fluid flow sensor 500, which comprises concave central portion 540 on its second reflector surface 520, opposite a planar first reflector 510 surface in which electro-acoustic transducers are located.

The concave central portion 540 extends from the centre of the cavity, where the second mode is weakly present, to a radius of the second reflector surface 520 beneath the transducers at which the second mode is relatively strong. The flat portion of the second reflector 520 outside the lip of the concave centre 540 is the highest part of the second reflector surface 520 and defines the narrowest part of the cavity 530 between itself and the planar first reflector surface 510.

The concave central portion 540 provides an increased separation between the reflector surfaces 510, 520 in the centre of the cavity 530 relative to the narrowest part of the cavity where the second mode is relatively strong, thereby increasing the separation between the first and second peaks of the frequency response of the cavity in the same manner as the sensor 400 of Fig. 4.

In finite element analysis (FEA) simulations, providing concave centres of depths 0.1mm, 0.2mm and 0.3mm increased the frequency separation to approximately 650Hz, 800Hz, and 850Hz respectively compared to approximately 600Hz in the flat bottomed sensor of Figs. 1a to 1c.

Additionally, the concave central portion 540 converging acoustic waves towards the centre of the cavity 530, thereby amplifying the first mode, in a similar manner to the inner surface of the annular ridge 440 of the sensor 400 of Fig. 4. The second mode may also be amplified by the concave central portion 540, but by less than the first mode. Therefore, the ratio of the second mode's amplitude to the first mode's amplitude is reduced.

In finite element analysis (FEA) simulations, providing concave centres of depths 0.2mm and 0.3mm decreased the amplitude ratios to approximately 0.31 and 0.27 respectively compared to approximately 0.5 in the flat bottomed sensor of Figs. 1a to 1c.

In some embodiments, the second mode of sensor 500 may also be amplified by the concave central portion 540. However due, to its location away from the centre of the concave central portion 540, in such embodiments the second mode may be amplified by less than the first mode, and the ratio M2/M1 may decrease.

The depth of the concave central portion 540 is preferably deliberately kept small compared to the separation between the reflectors 510, 520, such that it does not unduly interfere with the flow of fluid through the cavity 530. In the illustrated sensor 500, the depth of the concave central portion 540 at its centre is only 0.5mm, 5% of the separation between the reflectors 510, 520 outside the concave central portion 540. In other embodiments, the depth of the concave central portion 540 may be smaller, for example between 2% and 3% of the separation between the reflector surfaces outside the concave central portion 540.

Alternatively, or additionally, any influence of the concave central portion 540 on the flow of fluid through the cavity may be reduced by the entire profile of the concave central portion 540 being distanced from the perimeter of the cavity 530, such that it does not exert influence on the fluid entering and exiting the cavity. The concave central portion 540 may be surrounded by a portion of its reflector surface 520 which may be substantially planar and/or plateau shaped between the concave central portion 540 and the perimeter of the cavity 530. In the illustrated sensor 500, the separation between the outside of the concave central portion 540 and the perimeter of the cavity 530 is 8.25mm, 33% of the radius of the lower reflector 520 and the cavity 530. Other embodiments may comprise greater separations, such as 60% or more of the radius of the cavity 530 and/or the reflector surface 520 in which the concave central portion 540 is formed.

Alternatively, or additionally, the concave central portion 540 may be shaped appropriately to reduce aerodynamic drag. For example, the concave central portion 540 may have a concave arc-shaped cross section as shown in Fig. 5.

The purpose of the concave central portion 540 is to manipulate beneficially the acoustic field inside the cavity in the manner explained above, while at the same time leaving the flow field (speed and direction of air through the cavity 530) largely undisturbed.

Fig. 6 shows a third embodiment of a fluid flow sensor 600, which comprises a second reflector surface 620 with a concave central portion 640 and an annular ridge 650 extending around the perimeter of the concave central portion 640. The annular ridge 650 and the perimeter of the concave central portion 640 are both located beneath transducers in the first reflector surface 610 where the second mode is relatively strong. The crest of the annular ridge 650 defines a narrowest part of the cavity 630.

The concave central portion 640 in the centre of the cavity 630 and the raised ridge 650 towards the edge of the cavity 630 beneath the transducers, provide a larger difference in the height of the cavity its centre and the crest of the annular ridge, thereby providing a greater separation in the frequency of the first mode (which is primarily concentrated in the concave centre) and the second mode (which is primarily located in the vicinity of the annular ridge 650).

Additionally, the concave centre 640 and the inner surface of the annular ridge 650 both converge acoustic waves towards the centre of the cavity enhancing the first mode, while the convex annular ridge 650 dissipates or diffracts acoustic waves towards the edge of the cavity, thereby dampening the second mode.

Fig. 7 shows FEA simulations of the frequency responses 700, 750 of the sensor 400 with an annular ridge 440 shown in Fig. 4 and the sensor 600 with a concave centre 640 and an annular ridge 650 shown in Fig. 6.

The amplitudes of the first and second modes of each frequency response are measured relative to the amplitude of the first mode of frequency response 200 of the flat-bottomed sensor 100 shown in Fig. 2, whose amplitude is set as 1, and which has a separation between the first and second modes of approximately 600Hz, a first mode of amplitude 1 at approximately 34700Hz, a second mode of amplitude 0.5 at approximately 35300Hz, and a ratio M2/M1 of 0.5.

The frequency response 700 of the sensor 400 with the annular ridge 440 has a separation between the first and second modes of approximately 685Hz, a first mode of amplitude 1.75 at approximately 35240 Hz, a second mode of amplitude 0.25 at approximately 35925 Hz, and a ratio M2/M1 of 0.14.

The frequency response 750 of the sensor 600 with a concave centre 640 and an annular ridge 650 has a separation between the first and second modes of approximately 1140Hz, a first mode of amplitude 2.9 at approximately 35180 Hz, a second mode of amplitude 0.5 at approximately 36320 Hz, and a ratio M2/M1 of 0.17.

In the sensor 600 illustrated in Fig. 6, the annular ridge 650 has a height (H1) of 0.2mm, a width of 4mm, an inner radius (L1) at 10mm and a crest at a radius of 12mm. The central concave indentation has a depth (H2) of 0.5mm relative portion of the reflector surface 620 outside the annular ridge 650 and a radius of 10mm, such that its lip meets the inner wall of the annular ridge, defining a continuous surface therewith. The remaining dimensions of the sensor are identical to those of the sensor 400 shown in Fig. 4.

Other embodiments comprising annular ridges and central concave indentations may have other dimensions. Below is a table of examples of dimensions of such fluid flow speed sensors and the separations and relative amplitudes of the peaks of their frequency responses, as well as those of a flat lower reflector as shown in Figs 1a to 1c.

| Concave centre and inner ridge radius, L1(mm) | Ridge width, W1 (mm) | Ridge crest radius (mm) | Ridge height, H1 (mm) | Concave centre depth, H2 (mm) | Peak Separation (Hz) | Peak amplitude ratio, M2/M1 |
|---|---|---|---|---|---|---|
| Flat lower reflector | | | | | 600 | 0.45 |
| 7 | 10 | 12 | 0.2 | 0.2 | 800 | 0.3 |
| 7 | 10 | 12 | 0.4 | 0.4 | 1200 | 0.15 |
| 10 | 4 | 12 | 0.2 | 0.2 | 850 | 0.25 |
| 10 | 7 | 13.5 | 0.2 | 0.2 | 1100 | 0.3 |
| 10 | 10 | 15 | 0.2 | 0.2 | 1050 | 0.4 |
| 10 | 4 | 12 | 0.4 | 0.4 | 1200 | 0.15 |
| 10 | 7 | 13.5 | 0.4 | 0.4 | 1500 | 0.1 |
| 10 | 10 | 15 | 0.4 | 0.4 | 1500 | 0.2 |
| 13 | 4 | 15 | 0.2 | 0.2 | 1000 | 0.6 |
| 13 | 7 | 16.5 | 0.2 | 0.2 | 1000 | 0.9 |
| 13 | 10 | 18 | 0.2 | 0.2 | 1000 | 0.75 |
| 13 | 4 | 15 | 0.4 | 0.4 | 1300 | 0.45 |
| 13 | 7 | 16.5 | 0.4 | 0.4 | 1300 | 1.1 |
| 13 | 10 | 18 | 0.4 | 0.4 | 1250 | 0.9 |

The dimensions of annular ridges 440, 650 and/or concave centre 540, 640 comprised by embodiments of sensors may be governed by the wavelengths of sound inside their cavities 430, 530, 630, in the same manner that the separation between the reflectors 410, 510, 610, 420, 520, 620 relates to the sound wavelength and the resonance frequency of the cavity 630.

Fig. 8 shows a fourth embodiment of a fluid flow sensor 800. The fluid flow sensor 800 comprises lower reflector surface 820 with a concave central portion 840 and an annular ridge 850 extending around the perimeter of the concave central portion 840 in the same manner as the sensor 600 shown in Fig. 6, but differs from this sensor in that its upper reflector 810 is surrounded by a 2mm tall lip 860, and in that the separation between the reflectors is reduced to 9.71mm instead of 10mm.

A FEA simulation of the frequency response of the sensor 800 had a separation between the first and second peaks of approximately 1200Hz and a ratio M2/M1 of approximately 0.12.

The lip 860 is provided around the upper reflector in order to reduce the height of the open sides of the cavity 830 so that the speed of fluid flowing through the cavity 830 is reduced. This allows higher external fluid flow speeds to be measured before a maximum phase difference between an emitting and measuring transducer is reached. Increasing the height of the lip around one of the reflector surfaces generally decreases the amplitudes of both the first and second peaks, and increases the separation between them. In the illustrated embodiment, the lip is provided around the reflector surface comprising the transducers, however in other embodiments, a lip may alternatively, or additionally be formed around the other reflector.

The separation between the reflectors has been reduced to 9.71mm in the sensor 800 in order to obtain a primary resonant frequency at approximately 35200Hz in normal operating conditions. The exact frequencies of the resonant frequencies may be selected by selecting the separation between the two reflector surfaces, for example, separately to their shapes for suppressing the second mode as described above.

A FEA simulation of the frequency response of a variant of the sensor 800 with an annular ridge with a rectangular cross section (of height 0.2mm and width 4mm) rather than an arc shaped cross section (of height 0.2mm and width 4mm) had a separation between the first and second peaks of approximately 1200Hz and a peak amplitude ratio M2/M1 of approximately 0.1.

A lip 860 surrounding one of the reflector surfaces may strongly influence the flow field through the cavity 830 by constricting the lateral open sides of the cavity 830, which may thereby cause a considerable restriction to the flow of fluid through the cavity 830, but may only cause a minor disturbance to the acoustic field and the modes thereof. The influence of the lip 860 surrounding a reflector surface 810 may be the opposite of the influence of an annular ridge 850 and/or a concave central region 840 comprised by a reflector surface 820, both of which may strongly influence the acoustic field and modes thereof but may leave the flow field of fluid flowing through the cavity largely undisturbed.

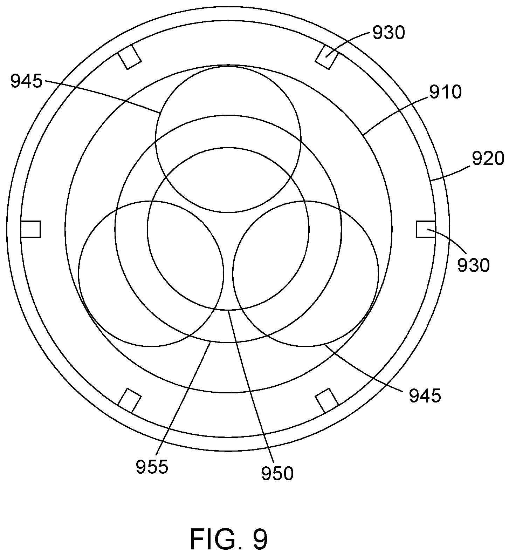

Fig. 9 shows a top down view 900 of a sensor 800 as shown in Fig. 8, showing the relative locations of the sensor's plurality of transducers, concave centre 840, and annular ridge 850.

Fig. 9 shows the first upper reflector's perimeter 910 where it meets a surrounding lip, the second lower reflector's perimeter 920, and the plurality of supports 930 between the lower reflector and the lip surrounding the first upper reflector. Fig. 9 further shows the outer perimeters 945 of each of the three transducers in the first upper reflector.

Fig. 9 also shows the outer edge 955 of the annular ridge and the perimeter 950 of the concave centre of the lower where it meets the inner edge 950 of the annular ridge. The perimeter 950 of the concave centre is level with the portion of the lower reflector outside the outer edge 955 of the annular ridge.

As is shown in Fig. 9, parts of the annular ridge (and a crest thereof that defines the narrowest part of the cavity between the reflector surfaces) extend across the reflector surface opposite the transducers.

In the illustrated sensor, the centres of the transducers are opposite the annular ridge (and an inner inclined surface thereof, between its inner edge 950 and its crest). However in alternative embodiments, the centres of the transducers may be opposite points inside the inner edge 950 of annular ridges provided at greater radii at least partially opposite the transducers.

In some embodiments, sensors may comprise shaped features one or both of their reflector surfaces, in addition to an annular ridge and/or concave central portions.

The invention has been described by way of example only, and it will be appreciated that variation may be made to the embodiments described above without departing from the scope of the claims.

## Claims

1. An acoustic resonance fluid flow sensor (400, 500, 600) comprising:
a first reflector surface (410, 510, 610);
a second reflector surface (420, 520. 620) spaced apart from the first reflector surface;
a generally cylindrical cavity (430. 530. 630) between the first and second reflector surfaces, the cavity comprising a central longitudinal axis; and
a plurality of transducers (140, 141, 142) located in the first reflector surface, at least one transducer of the plurality of transducers occupying a space from a first radial distance from the longitudinal axis to a second radial distance from the longitudinal axis;
wherein the cavity further comprises a narrowest part where a separation between the first and second reflector surfaces is a minimum distance, the minimum distance being less than a separation between the first and second reflector surfaces along the longitudinal axis, and
wherein the narrowest part at least partially surrounds the longitudinal axis,
**characterized in that** the narrowest part is at least partially located between the first radial distance and the second radial distance from the longitudinal axis.

2. A fluid flow sensor according to claim 1, wherein one of the first and second reflector surfaces comprises a ridge (440, 650) surrounding a centre of that reflector surface and wherein the narrowest part of the cavity is defined between the ridge and the other of the first and second reflector surfaces.

3. A fluid flow sensor according to claim 2 wherein the ridge is a continuous annular ridge that surrounds the centre of the reflector surface on which it is formed.

4. A fluid flow sensor according to claim 2 or claim 3 wherein the ridge has an arc-shaped cross-section.

5. A fluid flow sensor according to any preceding claim, wherein at least one of the first and second reflector surfaces comprises an indentation (540, 640) at least partially surrounded by the narrowest part of the cavity.

6. A fluid flow sensor according to claim 5 wherein the indentation is concave.

7. A fluid flow sensor according to any preceding claim further comprising a lip (860) surrounding at least one of the first and second reflector surfaces.

8. A fluid flow sensor according to any preceding claim, wherein the at least one transducer has a centre at a third radial distance from the longitudinal axis, and wherein the narrowest part is at least partially located at a radial location between the second radial distance and half of the third radial distance.

9. A fluid flow sensor according to any preceding claim wherein the at least one transducer comprises a centre at a third radial distance from the longitudinal axis, and wherein the narrowest part of the cavity is entirely located at a distance of at least half the third radial distance from the longitudinal axis.

10. A fluid flow sensor according to any preceding claim wherein the narrowest part of the cavity is entirely located at least a distance equal to 30% of a radius of a smaller of the first and second reflector surfaces from the longitudinal axis.

## Patentansprüche

1. Akustischer Resonanz-Fluiddurchflusssensor (400, 500, 600), umfassend:
eine erste Reflektoroberfläche (410, 510, 610);
eine zweite Reflektoroberfläche (420, 520, 620), die von der ersten Reflektoroberfläche beabstandet ist;
einen im Allgemeinen zylindrischen Hohlraum (430, 530, 630) zwischen der ersten und der zweiten Reflektoroberfläche, wobei der Hohlraum eine mittige Längsachse umfasst; und
eine Vielzahl von Wandlern (140, 141, 142), die in der ersten Reflektoroberfläche angeordnet sind, wobei mindestens ein Wandler aus der Vielzahl von Wandlern einen Raum von einem ersten radialen Abstand von der Längsachse bis zu einem zweiten radialen Abstand von der Längsachse einnimmt;
wobei der Hohlraum weiter einen schmalsten Teil umfasst, an dem eine Separierung zwischen der ersten und zweiten Reflektoroberfläche ein minimaler Abstand ist, wobei der minimale Abstand weniger als eine Separierung zwischen der ersten und zweiten Reflektoroberfläche entlang der Längsachse beträgt, und
wobei der schmalste Teil die Längsachse mindestens teilweise umgibt, **dadurch gekennzeichnet, dass** der schmalste Teil mindestens teilweise zwischen dem ersten radialen Abstand und dem zweiten radialen Abstand von der Längsachse angeordnet ist.

2. Fluiddurchflusssensor nach Anspruch 1, wobei eine der ersten und zweiten Reflektoroberfläche einen Steg (440, 650) umfasst, der einen Mittelpunkt dieser Reflektoroberfläche umgibt, und wobei der schmalste Teil des Hohlraums zwischen dem Steg und der anderen der ersten und zweiten Reflektoroberfläche definiert ist.

3. Fluiddurchflusssensor nach Anspruch 2, wobei der Steg ein durchgehender ringförmiger Steg ist, der den Mittelpunkt der Reflektoroberfläche umgibt, auf der er gebildet ist.

4. Fluiddurchflusssensor nach Anspruch 2 oder Anspruch 3, wobei der Steg einen bogenförmigen Querschnitt aufweist.

5. Fluiddurchflusssensor nach einem vorstehenden Anspruch, wobei mindestens eine der ersten und zweiten Reflektoroberfläche eine Vertiefung (540, 640) umfasst, die mindestens teilweise von dem schmalsten Teil des Hohlraums umgeben ist.

6. Fluiddurchflusssensor nach Anspruch 5, wobei die Vertiefung konkav ist.

7. Fluiddurchflusssensor nach einem vorstehenden Anspruch, weiter umfassend eine Lippe (860), die mindestens eine der ersten und zweiten Reflektoroberfläche umgibt.

8. Fluiddurchflusssensor nach einem vorstehenden Anspruch, wobei der mindestens eine Wandler einen Mittelpunkt in einem dritten radialen Abstand von der Längsachse aufweist und wobei der schmalste Teil mindestens teilweise an einer radialen Position zwischen dem zweiten radialen Abstand und der Hälfte des dritten radialen Abstands angeordnet ist.

9. Fluiddurchflusssensor nach einem vorstehenden Anspruch, wobei der mindestens eine Wandler einen Mittelpunkt in einem dritten radialen Abstand von der Längsachse umfasst und wobei der schmalste Teil des Hohlraums vollständig in einem Abstand von mindestens der Hälfte des dritten radialen Abstands von der Längsachse angeordnet ist.

10. Fluiddurchflusssensor nach einem vorstehenden Anspruch, wobei der schmalste Teil des Hohlraums vollständig in einem Abstand von mindestens gleich 30% eines Radius einer kleineren der ersten und zweiten Reflektoroberfläche von der Längsachse angeordnet ist.

## Revendications

1. Capteur de débit de fluide à résonance acoustique (400, 500, 600) comprenant :
une première surface réfléchissante (410, 510, 610) ;
une seconde surface réfléchissante (420, 520, 620) espacée de la première surface réfléchissante ;
une cavité globalement cylindrique (430, 530, 630) entre les première et seconde surfaces réfléchissantes, la cavité comprenant un axe longitudinal central ; et
une pluralité de transducteurs (140, 141, 142) situés dans la première surface réfléchissante, au moins un transducteur de la pluralité de transducteurs occupant un espace d'une première distance radiale par rapport à l'axe longitudinal à une deuxième distance radiale par rapport à l'axe longitudinal ;
dans lequel la cavité comprend en outre une partie la plus étroite où une séparation entre les première et seconde surfaces réfléchissantes est une distance minimale, la distance minimale étant inférieure à une séparation entre les première et seconde surfaces réfléchissantes le long de l'axe longitudinal, et
dans lequel la partie la plus étroite entoure au moins partiellement l'axe longitudinal, **caractérisé en ce que** la partie la plus étroite
est au moins partiellement située entre la première distance radiale et la deuxième distance radiale par rapport à l'axe longitudinal.

2. Capteur de débit de fluide selon la revendication 1, dans lequel l'une des première et seconde surfaces réfléchissantes comprend une arête (440, 650) entourant un centre de cette surface réfléchissante et dans lequel la partie la plus étroite de la cavité est définie entre l'arête et l'autre des première et seconde surfaces réfléchissantes.

3. Capteur de débit de fluide selon la revendication 2, dans lequel la crête est une crête annulaire continue qui entoure le centre de la surface réfléchissante sur laquelle elle est formée.

4. Capteur de débit de fluide selon la revendication 2 ou la revendication 3, dans lequel la crête présente une section transversale en forme d'arc.

5. Capteur de débit de fluide selon une quelconque revendication précédente, dans lequel au moins une des première et seconde surfaces réfléchissantes comprend une indentation (540, 640) au moins partiellement entourée par la partie la plus étroite de la cavité.

6. Capteur de débit de fluide selon la revendication 5 dans lequel l'indentation est concave.

7. Capteur de débit de fluide selon une quelconque revendication précédente comprenant en outre une lèvre (860) entourant au moins l'une des première et seconde surfaces réfléchissantes.

8. Capteur de débit de fluide selon une quelconque revendication précédente, dans lequel l'au moins un transducteur présente un centre à une troisième distance radiale par rapport à l'axe longitudinal et dans lequel la partie la plus étroite est au moins partiellement située à un emplacement radial entre la deuxième distance radiale et la moitié de la troisième distance radiale.

9. Capteur de débit de fluide selon une quelconque revendication précédente, dans lequel l'au moins un transducteur comprend un centre situé à une troisième distance radiale par rapport à l'axe longitudinal et dans lequel la partie la plus étroite de la cavité est entièrement située à une distance d'au moins la moitié de la troisième distance radiale par rapport à l'axe longitudinal.

10. Capteur de débit de fluide selon une quelconque revendication précédente, dans lequel la partie la plus étroite de la cavité est entièrement située à une distance égale à 30 % d'un rayon d'une plus petite des première et seconde surfaces réfléchissantes par rapport à l'axe longitudinal.
